# EUROPEAN PATENT SPECIFICATION

(11) **EP 0 586 170 B1**
(45) Date of publication and mention of the grant of the patent: **29.03.2000**
(21) Application number: 93306676.3
(22) Date of filing: 23.08.1993
(51) Int. Cl.: H04B 1/16, H04Q 7/32

(54) **A mobile radio communications unit**
Mobiles Funkkommunikationsgerät
Unité de radiocommunication mobile

(30) Priority: 04.09.1992 FI 923978
(43) Date of publication of application: 09.03.1994
(73) Proprietor: NOKIA MOBILE PHONES LTD., 24101 Salo (FI)
(72) Inventor: Jokimies, Matti, SF-24130 Salo (FI); Jorri, Sakari, SF-25130 Muurla (FI); Jarvenoja, Esa, SF-90650 Oulu (FI)
(74) Representative: Frain, Timothy John

(56) References cited:
- EP-A- 0 255 048
- US-A- 4 749 991
- US-A- 5 032 835

## Description

The present invention relates to a mobile radio communications unit.

In mobile radio communications units, particularly mobile telephones, the minimizing of power consumption is of great importance, because the capacity of the batteries used often limits the operating time of the radio communications unit. Because of this, a standby mode is used in mobile phones to switch off the transmitter while waiting for a call.

When the mobile radio communications unit is outside the network service area, where it cannot properly receive a signal from the desired radio system, it can either:
1) Continuously scan the frequencies in which network information can be found, or
2) Switch off the phone or part of it for a prescribed time or for a variable period, and scan the frequencies after the period with the purpose of saving battery power.

Some means of saving have been presented in the following patent publications. European patent application EP-A-255 048 entitled 'Portable Radio Telephone Having Power Saver' discloses a power saving arrangement for a portable radio telephone in the service area of a mobile telephone network. In this arrangement, the telephone receives signals from the network and judges from the received signal whether the radio telephone is inside or outside of the service area of the network. If the telephone is outside of the service area, its battery power is interrupted for a certain period.

International Patent Application WO 91/03884 entitled 'Battery Saver for a TDM System' relates to intercommunication between the controlling station and at least one remote unit, which has means of reducing power consumption. In the method described in this publication, it is at first attempted to synchronize with the signal of the base station, and if synchronization is not achieved, the telephone is switched to a battery saving state, in which power consumption is reduced for a variable period. When synchronization is achieved, the telephone waits for a call from the connection, and if a call is not received, power consumption is reduced for a specified period. However, synchronization is checked after specified intervals. If synchronization is lost, the telephone is switched to a battery saving state.

These and other known methods of battery saving do not provide the best possible service to the user, because it has been possible to choose only one of the saving methods described above, 1) or 2). For example, when the user of a mobile phone is moving, and drives into a tunnel or a garage, for example, or goes into such a place in a building where radio waves are strongly damped, and stays in this place for some time, the mobile phone can be automatically switched to the battery saving state and off. When the phone is then taken to a place where the radio field is better, it remains switched off until the prescribed time has passed. In this case the user might want a continuous scanning of radio frequencies, because it would improve the quality of the service without substantially increasing power consumption. On the other hand, if the user drives further away on purpose, outside of the network service area, he might want to ensure that the phone remains in the saving mode and functions as in method 2).

According to the present invention there is provided a mobile radio communications unit, which can be automatically switched to a battery saving state when outside the network service area of the radio communications system, whereby a part of said communications unit is switched off, characterized by the communications unit comprising a manually operable means by which the user of the communications unit may enable a battery saving mode, which must be enabled before the battery saving state can be automatically activated by the communications unit.

The user can now essentially control the saving functions himself.

An advantage of the invention is the provision of a more user friendly means of battery saving, for example by providing better means for the user to control the battery saving functions.

The telephone can also have a function which at regular or irregular intervals switches the telephone from the saving state, and if the telephone is outside the network service area, switches it back to the saving state.

Before a more detailed description, the terms used in the description are defined here:
a) Mobile Phone means a battery-powered radio telephone, and more generally also a telecommunications terminal using radio communication, which can be used while moving or while stationary.
b) Battery means here a battery or accumulator that is generally used in mobile phones.
c) Battery Saving Mode, BSM, means a situation in which the user has activated the battery saving function. It is to be noted here that the mobile phone or a part of it is actually not switched off, although the saving mode has been activated.
d) Battery Saving State, BSS, means a state in which the mobile phone or a part of it, for example the transmitter, has been switched off. A prerequisite for the saving state is that the saving mode BSM has been activated, that is, the mobile phone can be switched off if and only if the saving mode has been activated before hand. The battery saving state is activated when no network signal can be detected.
e) Network Service Area, NSA, means the area where the mobile phone can properly receive the network signal of the desired radio system. NSA is not necessarily the same as the Operator Coverage Area, OCA. For example, in the GSM (Global System for Mobile Communication), the Network Service Area NSA defined here can consist of the networks of more than one GSM operator.

An embodiment of the present invention is described herewith, by way of example, with reference to the accompanying drawings, in which:

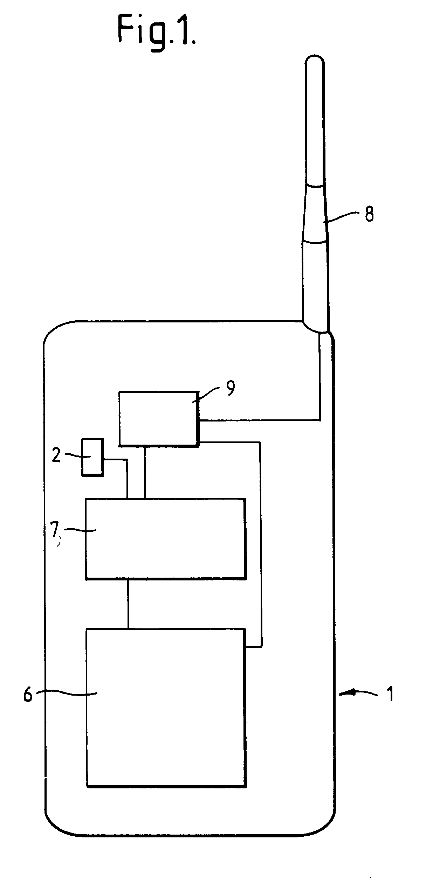

Figure 1 is a schematic illustration of a communications unit in accordance with the present invention; and

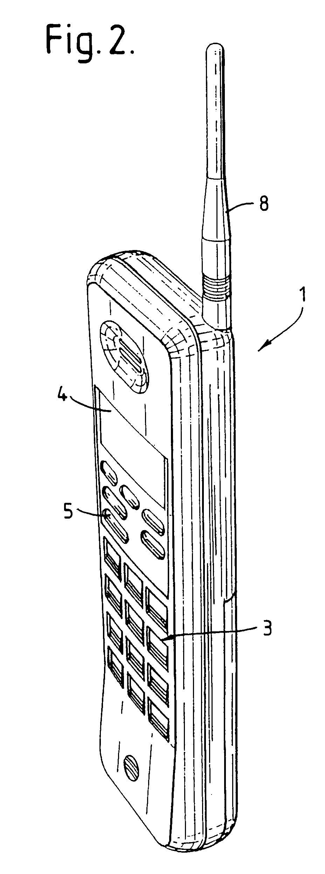

Figure 2 is a schematic illustration of the exterior of the communications unit of Figure 1.

In the following description the starting point is the assumption that the portable radio communications unit, in this example a mobile phone, scans the selected band of frequencies and judges from the level of the received signal whether the mobile phone is inside or outside of the network service area NSA.

The portable radio communications unit in the form of a mobile phone 1 is provided with a means 2,5 of operation by which the user can enable and disable the battery saving mode BSM, with the effect that the battery saving state BSS can be activated only when BSM has been activated. When the user interface of a mobile phone consists of a keyboard 3 and a display 4, this is done by adding an item to the menu shown on the screen. By selecting this item from the menu with a function key 5, the user can enable the battery saving mode reducing power used from the battery 6 or disable it. The selected BSM (enabled/disabled) is saved to the permanent memory of the mobile radio communications unit, which can be an EEPROM, a Flash-ROM or a battery-checked RAM memory, and in addition to this, the selected function is indicated by a symbol shown on the display 4 or by some other corresponding means.

When the user enables the battery saving mode BSM by using the display and function key 5, the internal logic of the mobile phone 1, controlled by a microprocessor 7 and its programs, for example, enables the activation of the battery saving state BSS when the phone is outside of the network service area (NSA) wherein the antenna 8 and the transceiver 9 of the radio telephone 1 does not properly receive the network signal.

In order to increase convenience of use, the mobile phone 1 is provided with activation switching, which switches the phone from the battery saving state BSS, when any key on the keyboard is pressed, but which does not affect the selected saving mode BSM. Here the activation switching means primarily the energization off circuits and/or programs of the mobile phone 1 for activation. Naturally it is also possible to add a separate push-button to the keyboard for this on/off switching. By using the activation switching the user can temporarily change the battery saving state BSS.

The designer of the mobile phone 1 can decide whether it is practicable to exit BSS by pressing any key or by pressing a key or keys designed for this purpose, possibly also in a predetermined order.

In some mobile phone systems, such as GSM, the mobile phone is provided with a Subscriber Identity Module, SIM. In this case, the user must type in a password from the keyboard for changes in the operation mode. In this case, the mobile phone can request the password every time it is switched on, that is, when the battery saving state BSS is disabled. This could cause difficulties with the battery saving mode BSM, and so this case is arranged in such a way that the mobile phone does not request a password when it is switched from the saving state BSS. In the practical implementation the state of the operating voltage conducted to the interface of the subscriber identity module, SIM, is made independent of the saving state BSS, which means that the subscriber identity module does not react to changes of the saving state.

In this example, the starting point has so far been the assumption that the mobile phone 1 judges from the level of the network signal received whether it is inside or outside of the service area of the network. However, this method has the disadvantage that the mobile phone accepts a network signal which is too noisy, a signal from another radio system, or rejects a signal which has a low level, although it would be able to detect it. In most analogue systems, the method based on the level of the signal is practical, but in digital systems, such as GSM, it would be possible to use much more sophisticated criteria and provide better service to the subscriber. For this purpose, the invention provides a possibility to use more exact detection.

This is done so that the mobile phone 1 judges that it is inside the network service area when it receives a signal with a carrier frequency of the system and is able to decode the information of the signal successfully, and that it is outside the network service area NSA when it cannot receive a network signal or when it is not able to decode the information successfully.

As described in more detail, the mobile phone scans all the carrier frequencies available in the system and searches for a signal. In GSM, for example, these frequencies are 935.2 MHz + N±0.2 MHz, where N is an integer between 0...123. When the mobile phone finds a signal from a carrier wave, it tries to decode this signal. If the decoding attempt fails, that carrier wave cannot be accepted as a carrier wave of the desired system, and the scanning is continued. When the decoding of a received signal succeeds, the phone is in the network service area NSA. If a network signal is not found on any carrier wave, the phone is outside of the service area. In order to discover this, the scanning is done over all the carrier frequencies available. In GSM, for example, the number of frequencies is 124. As an alternative, the scanning can be done only over a predetermined subset of the carrier waves.

In view of the foregoing it will be clear to a person skilled in the art that modifications may be incorporated without departing from the scope of the present invention.

## Claims

1. A mobile radio communications unit, which can be automatically switched to a battery saving state when outside the network service area of the radio communications system, whereby a part of said communications unit is switched off, characterized by the communications unit comprising a manually operable means by which the user of the communications unit may enable a battery saving mode, which must be enabled before the battery saving state can be automatically activated by the communications unit.

2. A mobile radio communications unit as claimed in claim 1, wherein that while the battery saving mode is enabled, the communications unit is adapted to automatically switch off from the battery saving state periodically and is automatically switched back to the saving state when said unit is outside of the network service area.

3. A mobile radio communications unit as claimed in claim 1 or claim 2, wherein that the battery saving mode selected by said manually operable means is stored in a permanent memory in the communications unit.

4. A mobile radio communications unit as claimed in any of claims 1 to 3, comprising an indicator to show that the battery saving mode has been enabled.

5. A mobile radio communications unit as claimed in any one of the previous claims, comprising a keyboard, including an activation switch, which switches the communications unit to and from the battery saving state when activated, but which does not alter the selected battery saving mode.

6. A mobile radio communications unit as claimed in claim 5, which may be switched from the battery saving state by pressing one or more predetermined keys.

7. A mobile radio communications unit as claimed in any one of the previous claims, to be used in a system which requires a Subscriber Identity Module and a password, wherein that the communications unit does not request a user password when it is switched from the battery saving state.

8. A mobile radio communications unit as claimed in any one of the previous claims, wherein the communications unit is determined to be inside the network service area when it receives a signal at a carrier frequency of the system and successfully decodes the information therein and is determined to be outside the network service area when it cannot receive a network signal or when it cannot decode the information within the network signal.

9. A mobile radio communications unit as claimed in any one of the previous claims, wherein the operating voltage of the transmitter is switched off when the communications unit is in the battery saving state.

10. A mobile radio communications unit as claimed in any one of the previous claims in the form of a radio telephone.

## Patentansprüche

1. Mobilfunkkommunikationsgerät, das automatisch in einen Batteriesparzustand geschaltet werden kann, wenn es sich außerhalb des Netzdienstbereichs des Funkkommunikationssystems befindet, wobei ein Teil des Kommunikationsgeräts abgeschaltet ist, **dadurch gekennzeichnet**, daß das Kommunikationsgerät manuell betreibbare Mittel enthält, durch die der Benutzer des Kommunikationsgeräts einen Batteriesparmodus aktivieren kann, der aktiviert werden muß, bevor der Batteriesparzustand automatisch durch das Kommunikationsgerät aktiviert werden kann.

2. Mobilfunkkommunikationsgerät nach Anspruch 1, wobei während des aktivierten Batteriesparmodus das Kommunikationsgerät ausgelegt ist, um den Batteriesparzustand periodisch auszuschalten, und es automatisch in den Sparzustand zurückgeschaltet wird, wenn sich das Gerät außerhalb des Netzdienstbereichs befindet.

3. Mobilfunkkommunikationsgerät nach Anspruch 1 oder 2, wobei der durch die manuell betreibbaren Mittel ausgewählte Batteriesparmodus in einem Festspeicher des Kommunikationsgeräts gespeichert ist.

4. Mobilfunkkommunikationsgerät nach irgendeinem der Ansprüche 1 bis 3, mit einem Anzeiger zur Anzeige des aktivierten Batteriesparmodus.

5. Mobilfunkkommunikationsgerät nach irgendeinem der vorangegangenen Ansprüche, mit einem Tastenfeld, das einen Aktivierungsschalter umfaßt, der bei Betätigung das Kommunikationsgerät in den Batteriesparzustand und zurück schaltet, jedoch nicht den ausgewählten Batteriesparmodus ändert.

6. Mobilfunkkommunikationsgerät nach Anspruch 5, das aus dem Batteriesparzustand heraus geschaltet werden kann, indem eine oder mehrere vorbestimmte Tasten gedrückt werden.

7. Mobilfunkkommunikationsgerät nach irgendeinem der vorangegangenen Ansprüche, zur Verwendung in einem System, das ein Teilnehmeridentifizierungsmodul und ein Paßwort erfordert, wobei das Kommunikationsgerät vom Benutzer kein Paßwort anfordert, wenn es aus dem Batteriesparzustand heraus geschaltet wird.

8. Mobilfunkkommunikationsgerät nach irgendeinem der vorangegangenen Ansprüche, wobei das Kommunikationsgerät innerhalb des Netzdienstbereichs ist, wenn es ein Signal bei einer Trägerfrequenz des Systems empfängt und die darin enthaltene Information erfolgreich dekodiert, und außerhalb des Netzdienstbereichs, wenn es kein Netzsignal empfangen oder die im Netzsignal enthaltene Information nicht dekodieren kann.

9. Mobilfunkkommunikationsgerät nach irgendeinem der vorangegangenen Ansprüche, wobei die Betriebsspannung des Senders abgeschaltet wird, wenn sich das Kommunikationsgerät im Batteriesparzustand befindet.

10. Mobilfunkkommunikationsgerät nach irgendeinem der vorangegangenen Ansprüche, wobei es als Funktelefon ausgebildet ist.

## Revendications

1. Unité mobile de communication radio, qui peut être automatiquement commutée dans un état d'économie de batterie lorsqu'elle se trouve à l'extérieur de la zone de service du réseau du système de communication radio, une partie de ladite unité de communication étant alors déconnectée, caractérisée en ce qu'elle comporte un moyen activable manuellement par lequel l'utilisateur de l'unité de communication peut activer un mode d'économie de batterie, qui doit être activé avant que l'état d'économie de batterie puisse être automatiquement activé par l'unité de communication.

2. Unité mobile de communication radio selon la revendication 1, dans laquelle, tandis que le mode d'économie de batterie est activé, l'unité de communication est conçue pour automatiquement se déconnecter à partir de l'état d'économie de batterie périodiquement, et peut être automatiquement reconnectée sur l'état d'économie lorsque ladite unité est en dehors de la zone de service du réseau.

3. Unité mobile de communication radio selon la revendication 1 ou 2, dans laquelle le mode d'économie de batterie sélectionné par ledit moyen activable manuellement est stocké dans une mémoire permanente de l'unité de communication.

4. Unité mobile de communication radio selon l'une quelconque des revendications 1 à 3, comportant un indicateur pour montrer que le mode d'économie de batterie a été activé.

5. Unité mobile de communication radio selon l'une quelconque des revendications précédentes, comportant un clavier, incluant un commutateur d'activation, qui commute l'unité de communication vers et à partir de l'état d'économie de batterie lorsqu'il est activé, mais qui n'altère pas le mode d'économie de batterie sélectionné.

6. Unité mobile de communication radio selon la revendication 5, qui peut être commuté à partir de l'état d'économie de batterie en pressant une ou plusieurs touches prédéterminées.

7. Unité mobile de communication radio selon l'une quelconque des revendications précédentes, à utiliser dans un système qui exige un Module d'Identification d'Abonné et un mot de passe, dans laquelle l'unité de communication ne demande pas de mot de passe de l'utilisateur lorsqu'elle est commutée à partir de l'état d'économie de batterie.

8. Unité mobile de communication radio selon l'une quelconque des revendications précédentes, dans laquelle l'unité de communication est déterminée comme étant à l'intérieur de la zone de service lorsqu'elle reçoit un signal à une fréquence porteuse du système et décode avec succès les informations qui s'y trouvent, et est déterminé comme étant en dehors de la zone de service du réseau lorsqu'elle ne peut pas recevoir un signal du réseau ou lorsqu'elle ne peut pas décoder les informations dans le signal du réseau.

9. Unité mobile de communication radio selon l'une quelconque des revendications précédentes, dans laquelle la tension opérationnelle de l'émetteur est coupée lorsque l'unité de communication est dans l'état d'économie de batterie.

10. Unité mobile de communication radio selon l'une quelconque des revendications précédentes, dans laquelle ladite unité de communication est un radio téléphone.
